# EUROPÄISCHE PATENTSCHRIFT

(11) **EP 0 641 093 B1**
(45) Veröffentlichungstag und Bekanntmachung des Hinweises auf die Patenterteilung: **05.02.2003**
(21) Anmeldenummer: 94111479.5
(22) Anmeldetag: 22.07.1994
(51) Int. Cl.: H04B 7/24, H04L 1/12

(54) **Funksystem mit fortlaufender Anpassung an Kapazitätbedarf durch Einstellung der Sendeempfänger**
Radio system with permanent adaptation to need in capacity through command of sender and receiver
Système radio avec adaptation constante du besoin en débit par commande des émetteurs et récepteurs

(30) Priorität: 28.08.1993 DE 4329010
(43) Veröffentlichungstag der Anmeldung: 01.03.1995
(73) Patentinhaber: Alcatel SEL Aktiengesellschaft, 70435 Stuttgart (DE)
(72) Erfinder: Szabo, Lazlo, Dr., D-70825 Korntal (DE)
(74) Vertreter: Knecht, Ulrich Karl, Dipl.-Ing.

(56) Entgegenhaltungen:
- WO-A-88/04496
- WO-A-92/06546
- GB-A- 2 174 571
- US-A- 4 763 322
- US-A- 5 128 959
- US-A- 5 208 804

## Beschreibung

Die Erfindung betrifft ein Funksystem nach dem Oberbegriff des Patentanspruchs 1, eine Funkfeststation und eine entfernte Funkstation für dieses Funksystem sowie eine Funkschnittstelle und ein Verfahren zur Funkübertragung in diesem Funksystem.

In dem Handbuch "Mobilfunk" von J. Kedaj u. G. Hentschel, Neue Mediengesellschaft, Ulm, 3. Aufl., 1993, Kap. 4 wird ein nach GSM (Global System for Mobile Communications) standardisiertes Funktelefonsystem beschrieben, das Funkfeststationen (FuFSt) und entfernte Funkstationen (Funktelefongerät, FuTelG) enthält, die über eine Funkschnittstelle Nutzinformationen und Signalisierungen austauschen. Wie in den Kap. 4.1.5.3 und 4.1.5.8 beschrieben, ist die Funkschnittstelle durch Parameter charakterisiert, die im Funksystem nach dem GSM-Standard vorgegeben sind. Demnach stehen etwa zur Funkübertragung von Nutzinformationen zwei Verkehrskanäle (Bm und Lm) mit vorgegebenen Nutzraten von 22,8 kbit/s (Full-Rate) bzw. 11,4 kbit/s (Half-Rate) zur Verfügung. Je nach dem Kapazitätsbedarf des für die entfernte Funkstation eingerichteten Funkdienstes wird einer dieser Verkehrskanäle belegt. In dem herkömmlichen Funksystem müssen das Einrichten und die Durchführung von Funkübertragungen, insbesondere von Funkübertragungen für Funkdienste mit einem zeitlich sich ändernden Kapazitätsbedarf, wie etwa Multimedia-Dienste, auf die vorgegebenen Nutzraten, abgestellt sein.

Es sind auch Übertragungssysteme, insbesondere Funksysteme bekannt, bei denen zu Beginn einer Übertragung veränderbare Parameter vorgegeben werden, mittels derer die Übertragungskapazität an den Einzelfall angepaßt wird. Dies sind einerseits Leistungsparameter und andererseits Auswahlparameter für einen zu verwendenden Übertragungskanal, etwa durch Zusammenfassung einzelner Übertragungskanäle oder durch Auswahl einer bestimmten Übertragungsgeschwindigkeit. Hiervon geht die vorliegende Erfindung aus. Beispiele hierzu sind ÜS-A-5,128,959, WO-A-88/04496 und US-A-5,208,804.

Aufgabe der Erfindung ist es, ein Funksystem sowie eine Funkfeststation, eine entfernte Funkstation und eine Funkschnittstelle dafür und ein Verfahren zur Funkübertragung so zu schaffen, daß diesem Problem begegnet wird.

Gelöst wird die Aufgabe durch ein Funksystem nach Anspruch 1 oder 2, eine Funkfeststation nach Anspruch 8 oder 9, eine entfernte Funkstation nach Anspruch 11 oder 12, eine Funkschnittstelle nach Anspruch 14, eine FDMA- und/oder CDMA-Funkschnittstelle nach Anspruch 15 und ein Verfahren zur Funkübertragung nach Anspruch 16 oder 17.

Vorteilhafte Weiterbildungen sind den Unteransprüchen zu entnehmen.

Es folgt im weiteren die Beschreibung der Erfindung anhand eines Ausführungsbeispiels und unter Zuhilfenahme folgender Zeichnungen:
- Fig. 1,: die ein erfindungsgemäßes Mobilfunksystem zeigt;
- Fig. 2a,: die ein für das Mobilfunksystem zugewiesenes Frequenzspektrum zeigt, innerhalb dessen unterschiedliche Mehrfachzugriffsverfahren zur Funkübertragung angewandt werden;
- Fig. 2b,: die für verschiedene Teilnehmer eingerichtete Funkdiensteprofile mit den entsprechenden Funkschnittstellen-Parametern zeigt;
- Fig. 3,: die eine Funkfeststation für das Mobilfunksystem zeigt und
- Fig. 4,: die eine als Mobilstation ausgeführte entfernte Funkstation für das Mobilfunksystem zeigt.

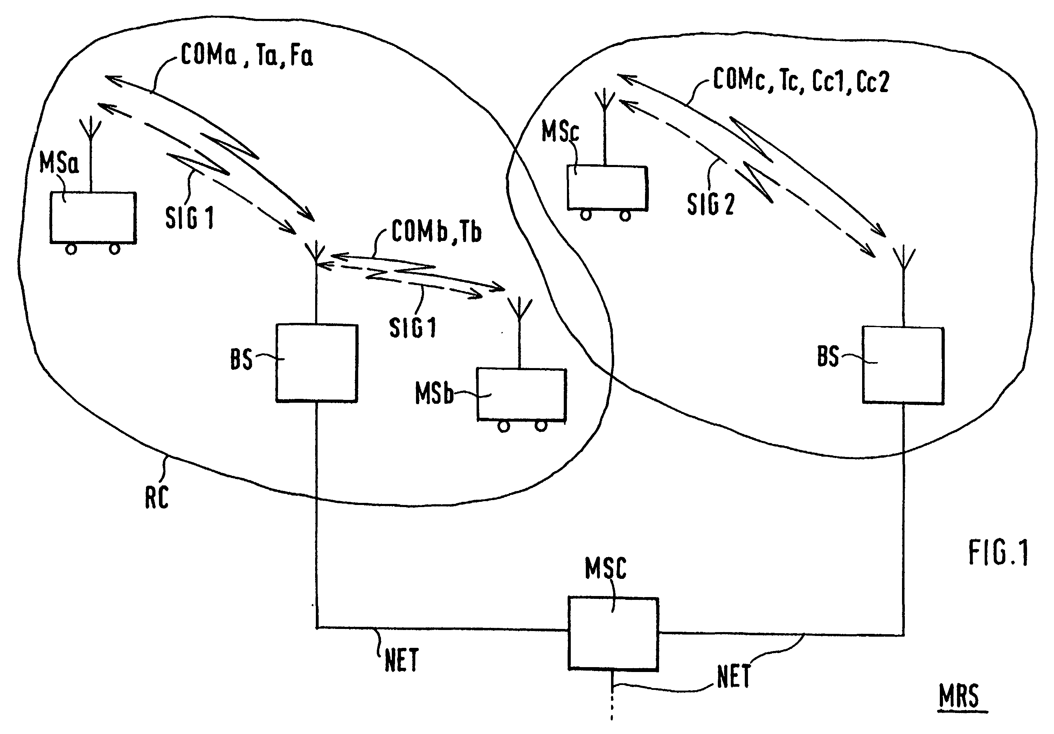

In Fig. 1 ist ein Funksystem als ein Mobilfunksystem MRS mit zwei Funkfeststationen BS, einer Funkvermittlungsstelle MSC und drei entfernten Funkstationen MSa, MSb und MSc dargestellt. Die entfernten Funkstationen sind als Mobilstationen ausgeführt, können jedoch auch stationäre Funkstationen sein. Die Funkfeststationen sind über ein Leitungsnetz NET mit der Funkvermittlungsstelle MSC verbunden, die Nachrichtenverbindungen zu Telekommunikationsnetzen schaltet. Zwei der Mobilstationen MSa und MSb befinden sich im Funkfeldbereich RC der einen Funkfeststation BS. Die andere Mobilstation MSc befindet sich im Funkfeldbereich der anderen Funkfeststation.

Die Funkübertragungen zwischen den Mobilstationen und den Funkfeststationen erfolgt über Funkschnittstellen SIG1 und SIG2, die durch fest vorgegebene Parameter charakterisiert sind, und über Funkschnittstellen COMa bis COMc, die durch veränderbare Parameter Ta, Fa, Tb, Tc, Cc1 und Cc2 charakterisiert sind. Die Funkschnittstellen mit den festen Parametern SIG1 und SIG2 werden im weiteren kurz feste Funkschnittstellen genannt. Sie dienen hier zur Signalisierung zwischen den Funkfeststationen und den Mobilstationen. Die Funkschnittstellen mit den veränderbaren Parametern COMa bis COMc werden im weiteren kurz flexible Funkschnittstellen genannt. Sie dienen hier zur Funkübertragung von Nutzinformationen zwischen den Funkstationen. Die Funkübertragung für die Signalisierung und für die Nutzinformation erfolgt beispielsweise in einem Frequenzbereich zwischen 1895 und 1935 MHz, wobei die Signalisierung im unteren Teil dieses Frequenzbereiches innerhalb eines schmalen Bandes von beispielsweise 25 kHz stattfindet. Der andere weitaus größere Teil des Frequenzbereiches ist zur Funkübertragung der Nutzinformationen reserviert. Die Funkfeststationen geben die veränderbaren Parameter der Funkschnittstellen COMa bis COMc für die Funkübertragungen der Nutzinformationen so vor, daß die Übertragungskapazitäten an die einzelnen Bedarfsanforderungen der entfernten Funkstationen (Mobilstationen) angepaßt sind. Weiterhin ändern die Funkfeststationen die Parameter der Funkschnittstellen COMa bis COMc, falls dies aufgrund von sich ändernden Bedarfsanforderungen der Mobilstationen erforderlich ist. Daher wird im folgenden auch kurz von flexiblen Funkschnittstellen COMa bis COMc gesprochen. Die Vorgabe und Änderung der veränderbaren Parameter für die flexiblen Funkschnittstellen zur Zuweisung an die jeweilige entfernte Funkstation wird später näher beschrieben.

In Fig. 1 ist eine mögliche Zuweisung von flexiblen Funkschnittstellen wie folgt dargestellt:

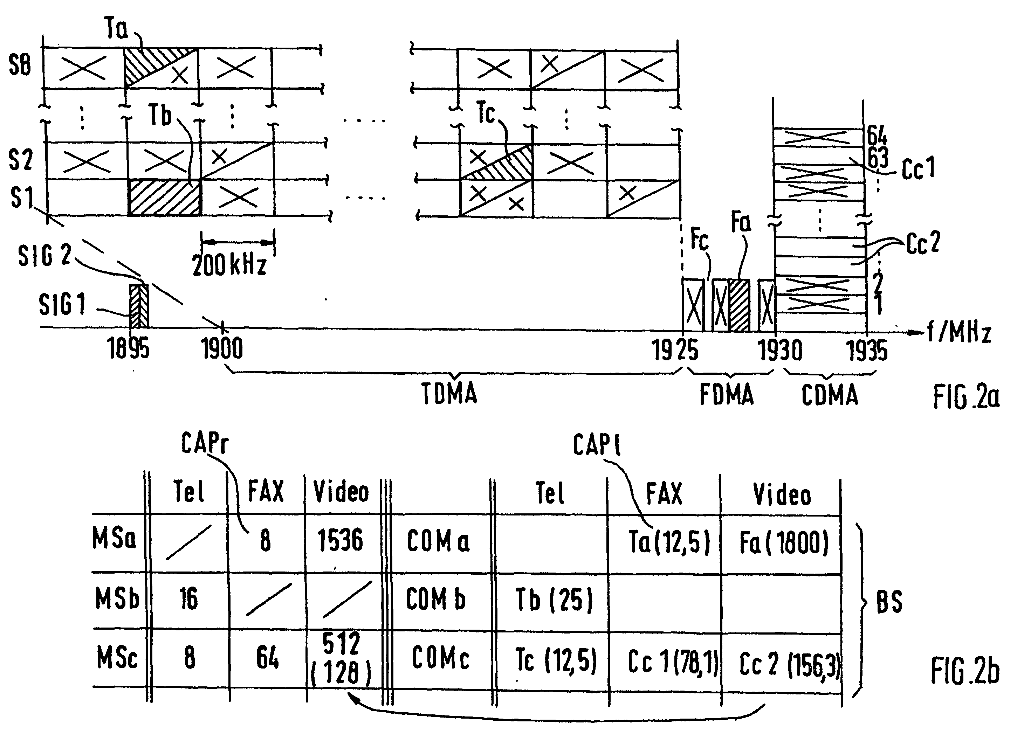

Eine der Mobilstationen MSa tauscht mit einer der Funkfeststationen BS Nutzinformationen über eine flexible Funkschnittstelle COMa aus, deren Parameter TA einen Zeitkanal innerhalb einer Funkübertragung im Zeitmultiplex (TDMA) charakterisieren und deren Parameter Fa einen Frequenzkanal innerhalb einer Funkübertragung im Frequenzmultiplex (FDMA) charakterisieren. Diese Parameter wurden nach einer Analyse der Funkfeststation innerhalb des zur Funkübertragung zugelassenen Frequenzbereiches so zugeteilt, daß freie Übertragungskapazitäten, d.h. hier freie Zeit- oder Frequenzkanäle zur Einrichtung der flexiblen Funkschnittstelle, bereitgestellt werden. So liegt beispielsweise der Zeitkanal Ta innerhalb eines Frequenzbandes zwischen 1900 und 1925 MHz, das für eine TDMA-Funkübertragung mit acht Zeitschlitzen S1 bis S8 und einem Frequenzraster von 200 kHz reserviert ist. Die hier beschriebene TDMA-Funkübertragung ist in Fig. 2a genauer dargestellt und entspricht im wesentlichen den Empfehlungen für das Funksystem "DCS 1800" (Digital Cellular System, 1800 MHz). Der Zeitkanal Ta liegt hier auf der Trägerfrequenz 1900,3 MHz im Zeitschlitz S8, wobei dieser wechselweise mit einem anderen Zeitkanal geteilt wird (Half-Rate-Kanal). Der Zeitkanal Ta hat eine Frequenzbandbreite von 12,5 kHz und ist für eine FAX-Datenübertragung mit 8 kbit/s der Mobilstation MSa zugeteilt. Neben dem FAX-Funkdienst hat die Mobilstation MSa einen Video-Funkdienst gebucht (Bewegtbildübertragung), der eine Nutzrate von 1536 kbit/s beansprucht. Die Funkfeststation BS hat dazu einen Frequenzkanal innerhalb eines Frequenzbandes zwischen 1925 und 1930 MHz eingerichtet. Dieser Frequenzbereich ist für eine FDMA-Übertragung reserviert, und hat kein festes Frequenzraster. Der für die Videoübertragung zugeteilte Frequenzkanal hat eine Bandbreite von 1800 kHz. Die Signalisierung zwischen der Mobilstation MSa und der Funkfeststation erfolgt über eine feste Funkschnittstelle SIG1 (Signalisierungskanal).

Den anderen Mobilstationen MSb und MSc sind ebenfalls flexible Funkschnittstellen COMb und COMc zugewiesen, wobei die Mobilstation MSb mit der einen Funkfeststation und die Mobilstation MSc mit der anderen Funkfeststation verbunden sind. Die Mobilstation MSb tauscht über die feste Funkschnittstelle SIG1 Signalisierungen mit der Funkfeststation BS aus. Die andere Mobilstation MSc tauscht mit der anderen Funkfeststation BS Signalisierungen über die andere feste Funkschnittstelle SIG2 aus. Wie zum Austausch der Nutzinformationen die flexiblen Funkschnittstellen COMa bis COMc auf die Kapazitätsanforderungen der Mobilstationen angepaßt werden, wird im folgenden anhand der Fig. 2 näher beschrieben.

Fig. 2a zeigt eine mögliche Aufteilung eines zur Funkübertragung vorgegebenen Frequenzbereiches zwischen 1895 und 1935 MHz. Zur Signalisierung sind im unteren Frequenzbereich zwischen 1895 und 1895,05 MHz zwei Frequenzkanäle zu je 12,5 kHz-Bandbreite eingerichtet. Der Frequenzbereich zwischen 1900 und 1935 MHz dient zur Funkübertragung von Nutzinformationen und ist in drei Teilbereiche aufgeteilt. Jeder Teilbereich ist für ein bestimmtes Funkübertragungsverfahren reserviert. Der Teilbereich zwischen 1900 und 1925 MHz ist für eine TDMA-Funkübertragung mit einem Frequenzraster von 200 kHz und einer Zeitschlitzfolge von acht Zeitschlitzen S1 bis S8 reserviert, wie sie für das DCS 1800-Funksystem empfohlen wird. Bei fortlaufender Belegung eines Zeitschlitzes steht somit eine Bandbreite von 25 kHz zur Verfügung (Full-Rate). Der Teilbereich zwischen 1925 und 1930 MHz ist für ein FDMA-Funkübertragungsverfahren reserviert, bei dem auf kein festes Frequenzraster zugegriffen wird. Der verbleibende Teilbereich zwischen 1930 und 1935 MHz ist für ein CDMA-Funkübertragung mit einem 6-Bit-wortbreiten Codealphabet reserviert. Jeder Codekanal hat somit eine Bandbreite von 78,125 kHz.

In diesem Ausführungsbeispiel können die Funkfeststationen BS nur auf den FDMA- und CDMA-Frequenzbereich uneingeschränkt zugreifen. Im TDMA-Frequenzbereich greift jede Funkfeststation auf lediglich eine Trägerfrequenz zu. Die Sendemittel und Empfangsmittel der Funkfeststationen sind auf die unterschiedlichen Übertragungsverfahren einstellbar. Die Übertragungsverfahren könnten durch unterschiedliche Normen bestimmt sein, so daß die Funkfeststationen als Mehrnormen-Funkfeststationen bezeichnet werden könnten. Beispielsweise erfolgt hier die TDMA-Funkübertragung nach der DCS 1800-Empfehlung, die z.Zt. das ETSI (European Telecommunications Standards Institute) in Anlehnung an die GSM-Norm erarbeitet. Zur Vereinfachung der Darstellung können die Mobilstationen in diesem Ausführungsbeispiel nur auf ein oder zwei der gezeigten Frequenzbereiche zugreifen, d.h. sie sind als Einnormen- bzw. Zweinormenendgeräte ausgeführt. Je nach Ausführung der einzelnen Mobilstationen werden die veränderbaren Parameter von der Funkfeststation an den Kapazitätsbedarf der Mobilstation im Rahmen der möglichen Funkübertragungsverfahren (Normen) angepaßt.

Es ist auch ein erfindungsgemäßes Mobilfunksystem denkbar, in dem sowohl jede der Mobilstationen, wie auch jede der Funkfeststationen auf den dargestellten Frequenzbereich uneingeschränkt zugreifen kann. Die Zeit-, Frequenz -und Codekanäle werden dann so belegt, daß jede Mobilstation möglichst alle von ihr angeforderten Funkdienste nutzen kann und daß die Funkübertragungen sich gegenseitig nicht stören. Dazu werten die Funkfeststationen Anforderungen aus, die von den Mobilstationen signalisiert werden, ermitteln freie Übertragungskapazitäten d.h. freie Kanäle zur Funkübertragung und geben die Parameter für die flexiblen Funkschnittstellen vor. Eine feste Ressourcenplanung, die jeder Funkfeststation bestimmte Frequenzbereiche, Zeitbereiche, oder Codebereiche zugeteilt, ist nicht notwendig. Die aktuelle Kanalbelegung wird beispielsweise über das Leitungsnetz zwischen den Funkfeststationen ausgetauscht. Dieses Mobilfunksystem ist zum einen flexibel in Bezug auf die jeweilige Funkübertragung zwischen einer Mobilstation und der Funkfeststation, indem die dazu eingerichtete flexible Funkschnittstelle an die geforderte Übertragungskapazität angepaßt wird. Zum anderen ist dieses Mobilfunksystem auch in Bezug auf das Verkehrsaufkommen flexibel, indem jede Funkfeststation nur soviel Übertragungskapazität innerhalb des Frequenzbereiches belegt, wie die Funksituation in ihrem Funkfeldbereich erfordert.

Die in Fig. 2a dargestellte Unterteilung des Frequenzbereiches in drei Teilbereiche soll die Darstellung insofern vereinfachen, als hier nur von Zeit- oder Frequenz- oder Codekanälen die Rede ist. Die in den Teilbereichen dargestellten Übertragungsverfahren TDMA, FDMA und CDMA können jedoch auch miteinander kombiniert werden.

Die Darstellung in Fig. 2a zeigt eine mögliche Funkübertragungssituation (Kanalbelegung), wobei belegte Übertragungskapazitäten (Kanäle) durch ein Kreuz gekennzeichnet sind. Die verbleibenden freien Funkübertragungskapazitäten (Kanäle) werden in den Funkfeststationen durch eine Spektralanalyse ermittelt und stehen zur Zuteilung zur Verfügung. Um festzustellen, ob ein Frequenzkanal belegt oder frei ist, genügt eine einfache Spektralanalyse, bei der Energiedichtespektren ausgewertet werden. Um freie Zeit- oder Codekanäle zu ermitteln, ist eine ausführlichere Analyse notwendig. Näherungsweise reicht jedoch auch eine Auswertung von Energiedichtespektren aus, um feststellen zu können, wieviele Zeit- oder Codekanäle frei sind. Eine mögliche Zuteilung der Kanäle aufgrund von Anforderungen der Mobilstationen wird im folgenden anhand Fig. 2b näher beschrieben.

Fig. 2b zeigt eine Tabelle, in der für jede Mobilstation MSa bis MSc ein mögliches Funkdiensteprofil und eine zugeordnete Einstellung der flexiblen Funkschnittstellen COMa bis COMc dargestellt sind. Jedes Funkdiensteprofil umfaßt bis zu drei Funkdienste wie: Fernsprechen Tel, Faksimile-Übertragung FAX und Bildfernsprechen Video. Jede der Mobilstationen fordert einen oder mehrere dieser Funkdienste bei der Funkfeststation an, indem eine gewünschte Übertragungskapazität CAPr für den jeweiligen Funkdienst an die Funkfeststation signalisiert wird.

In diesem Beispiel fordert die Mobilstation MSa die Funkdienste FAX mit 8 kbit/s und Video mit 1536 kbit/s (schnelle Bewegtbildübertragung) an. Die Funkfeststation hat nach Anforderung dieser Funkdienste mittels Analyse des zuvor beschriebenen Frequenzbereiches freie Übertragungskapazitäten CAPr ermittelt und teilt zur Einstellung einer flexiblen Funkschnittstelle COMa die Parameter Ta und Fa zu. Der Parameter Ta bestimmt hierbei einen Zeitkanal in dem TDMA-Frequenzbereich von 12,5 kHz Bandbreite (Half-Rate-Kanal). Dieser Zeitkanal Ta wird der Mobilstation MSa zugewiesen zur Funkübertragung des Funkdienstes FAX über die flexible Funkschnittstelle COMa. Der Parameter Fa charakterisiert einen Frequenzkanal im FDMA-Frequenzbereich von 1800 kHz Bandbreite. Dieser Frequenzkanal dient zur Bildfernsprechübertragung. Die Mobilstation MSb hat nur den Funkdienst Tel angefordert und beansprucht eine gewünschte Übertragungskapazität CAPr von 16 kbit/s. Die Funkfeststation BS gibt dazu den Parameter Tb vor, der einen Zeitkanal mit 25 kHz Bandbreite definiert und die flexible Funkschnittstelle COMb charakterisiert. Der Zeitkanal umfaßt einen freien Zeitschlitz innerhalb der TDMA-Übertragung (Full-Rate-Kanal). Die Mobilstation MSc hat alle drei hier gezeigten Funkdienste angefordert und beansprucht für den Funkdienst Tel eine gewünschte Übertragungskapazität von 8 kbit/s, für den Funkdienst FAX eine gewünschte Übertragungskapazität von 64 kbit/s und für den Funkdienst Video eine gewünschte Übertragungskapazität von 512 kbit/s (z.B. für eine langsame Bewegtbildübertragung). Zur Realisierung dieser Funkdienste stellt die andere Funkfeststation die flexible Funkschnittstelle COMc zur Verfügung. COMc wird u.a. durch den Parameter Tc charakterisiert, der einen freien Zeitkanal im TDMA-Frequenzbereich definiert mit einer Bandbreite von 12,5 kHz. Dieser Zeitkanal wird zur Fernsprechübertragung Tel bereitgestellt. COMc wird weiterhin durch zwei Parameter charakterisiert, von denen der eine einem ersten Codekanal Cc1 entspricht und der andere einem zweiten Codekanal Cc2 entspricht. Der erste Codekanal Cc1, der einen freien Code umfaßt, hat eine Bandbreite von 78,1 kHz und wird zur FAX-Übertragung bereitgestellt. Der Codekanal Cc2 hat eine Bandbreite von 156,3 kHz, da er sich aus zwei freien Codekanälen innerhalb der CDMA-Übertragung zusammensetzt. Die freie Übertragungskapazität von 156,3 kHz ist jedoch kleiner als die von der Mobilstation MSc gewünschte Übertragungskapazität von 512 kbit/s. Die Funkfeststation BS signalisiert daher eine Rückfrage an die Mobilstation MSc, wonach die Mobilstation der Zuteilung eines schmalbandigeren Kanals mit 128 kbit/s (z.B. für eine langsame Schwarz-Weiß-Bildfolge) zustimmen kann.

Wie Fig. 2 verdeutlicht werden die flexiblen Funkschnittstellen COMa, COMb und COMc an die jeweiligen Bedarfsanforderungen der Mobilstationen MSa, MSb und MSc angepaßt. Dadurch erzielt das Mobilfunksystem eine hohe Ausnutzung des gegebenen Frequenzspektrums. Verändert sich bei Durchführung eines der Funkdienste die erforderliche Kanalkapazität, wie dies beispielsweise beim Fernsprechen in Sprachpausen der Fall ist, so signalisiert die Mobilstation die neuen Anforderungen an die Funkfeststation, welche wiederum die Kanalkapazität an die aktuellen Bedarfsanforderungen anpaßt. Die Kanalkapazität einer Funkverbindung ändert sich somit fortlaufend ("atmender Funkkanal"), indem die veränderbaren Parameter der Funkschnittstelle adaptiv an die Anforderungen der Mobilstation angepaßt werden.

Weiterhin werden zwischen Mobilstation und Funkfeststation zur Funkübertragung Modulationsverfahren und Codierverfahren (z.B. zur Quellcodierung oder Kanalcodierung) vereinbart, die sich an die jeweiligen Bedingungen und an eine Mindestqualität für den Funkdienst anpassen. Die Parameter der flexiblen Funkschnittstelle, die Modulation und Codierung charakterisieren, werden entsprechend geändert. Die erforderliche Kanalkapazität zur Einhaltung der Mindestqualität wird durch intelligente Signalverarbeitungsverfahren wie etwa adaptives Transcoding oder Bildcodierung nach MPEG (Motion Picture Expert Group) oder JPEG (Joint Photographic Expert Group) und anderen bestimmt.

Eine besonders einfache Ausführung des Mobilfunksystems ist in dem gezeigten Beispiel dadurch gegeben, daß zur Funkübertragung das Frequenzband in feste Teilbereiche mit fest zugewiesenen Übertragungsverfahren unterteilt ist. Demnach könnte man das dargestellte Mobilfunksystem auch als Mehrnormenfunksystem bezeichnen, wobei jede Norm eines der jeweiligen Funkübertragungsverfahren festlegt. Zur Anpassung der Funkübertragung an die Bedarfsanforderungen der Mobilstation werden die Parameter der flexiblen Funkschnittstellen im Rahmen der Normen verändert, d.h. die Funkfeststation greift auf einen definierten Vorrat möglicher Parameter zu. Die Funkübertragung ändert sich fortlaufend innerhalb einer Norm (z.B. Wechsel zwischen Half-Rate- und Full-Rate-Modus) und zwischen verschiedenen Normen (z.B. zwischen GSM und DCS 1800). Es sind jedoch auch Funksysteme denkbar, in denen keine verschiedenen Normen festgelegt sind.

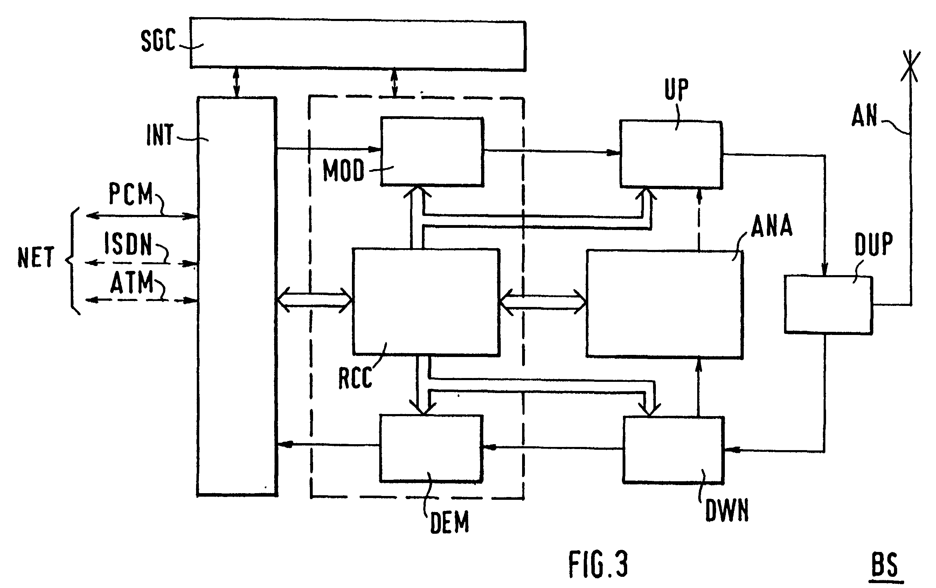

Im weiteren wird der Schaltungsaufbau einer erfindungsgemäßen Funkfeststation BS und einer erfindungsgemäßen entfernten Funkstation (Mobilstation MSa) gezeigt. Die Funkfeststation BS nach Fig. 3 ist wie folgt aufgebaut: Eine Antenne AN ist an einen Duplexer DUP angeschlossenen. Diesem sind in Empfangsrichtung Empfangsmittel nachgeschaltet, die eine Abwärtsmischstufe DWN und eine Demodulationsstufe DEM enthalten. In Senderichtung sind dem Duplexer Sendemittel vorgeschaltet, die eine Modulationsstufe MOD und eine Aufwärtsmischstufe UP enthalten. Die Modulationsstufe und die Demodulationsstufe sind mit einer Adapterschaltung INT verbunden, die den Anschluß an ein Leitungsnetz NET herstellt. Das Leitungsnetz dient hier zum Anschluß der Funkfeststationen BS an eine Funkvermittlungsstelle, wobei im PCM-Verfahren (Puls Code Modulation) auf 30 Kanälen übertragen wird. Das Leitungsnetz könnte z.B. auch ein ISDN- oder ATM-Netz sein (ISDN: Integrated Services Digital Network, ATM: Asynchronous Transfer Modus). Die Empfangsmittel und Sendemittel wie auch die Adapterschaltung INT werden von einer Auswerteschaltung RCC angesteuert, welche wiederum mit einer Überwachungsschaltung ANA verbunden ist. Die Überwachungsschaltung ist der Abwärtsmischstufe DWN nachgeschaltet. Die Funkfeststation BS enthält weiterhin eine Prozessorschaltung SGC, die die Modulationsstufe, die Demodulationsstufe, die Auswerteschaltung und die Adapterschaltung steuert. Die gezeigten Sendemittel und Empfangsmittel sind einstellbar und zur Funkübertragung der Nutzinformation vorgesehen. Die Sende- und Empfangsmittel zum Senden bzw. Empfangen von Signalisierungssignalen über Signalisierungskanäle sind hier nicht gezeigt.

Empfängt die Funkfeststation BS über einen Signalisierungskanal von einer Mobilstation die Anforderung eines oder mehrerer Funkdienste und die Anforderung der zur Realisierung dieser Funkdienste gewünschten Übertragungskapazität, so tastet die Funkfeststation den vorgegebenen Frequenzbereich mittels der Überwachungsschaltung ANA ab und ermittelt freie Übertragungskapazitäten, d.h. freie Zeit-, Frequenz- oder Codekanäle. Die Parameter, die diese freien Kanäle kennzeichnen, werden von der Überwachungsschaltung ANA ermittelt und an die Auswerteschältung RCC übermittelt. Diese wiederum vergleicht die freien Kanäle, d.h. die freien Übertragungskapazitäten, mit der gewünschten Übertragungskapazität und bestimmt in der Zeit, in der Frequenz oder in der Codierung veränderbare Parameter, die eine flexible Funkschnittstelle definieren, deren Übertragungskapazität möglichst wenige der freien Übertragungskapazitäten belegt. Mittels dieser veränderbaren Parameter steuert die Auswerteschaltung RCC die Modulationsstufe MOD und den Aufwärtsmischer UP sowie die Demodulatorstufe DEM und den Abwärtsmischer DWN, wodurch die Sendemittel bzw. Empfangsmittel zur Funkübertragung eingestellt werden. Die Auswerteschaltung RCC steuert weiterhin die Adapterschaltung INT zur Anpassung der Datenübertragungsraten, welche über das Leitungsnetz NET übertragen werden und welche zur Signalverarbeitung in der Funkfeststation benötigt werden (Transcoding). Die Prozessorschaltung SGC bildet die zentrale Steuereinheit der Funkfeststation BS und wird auch zur Steuerung der Signalisierung eingesetzt. Sie sorgt dafür, daß die von der Auswerteschaltung RCC bestimmten Parameter an die Mobilstation signalisiert werden.

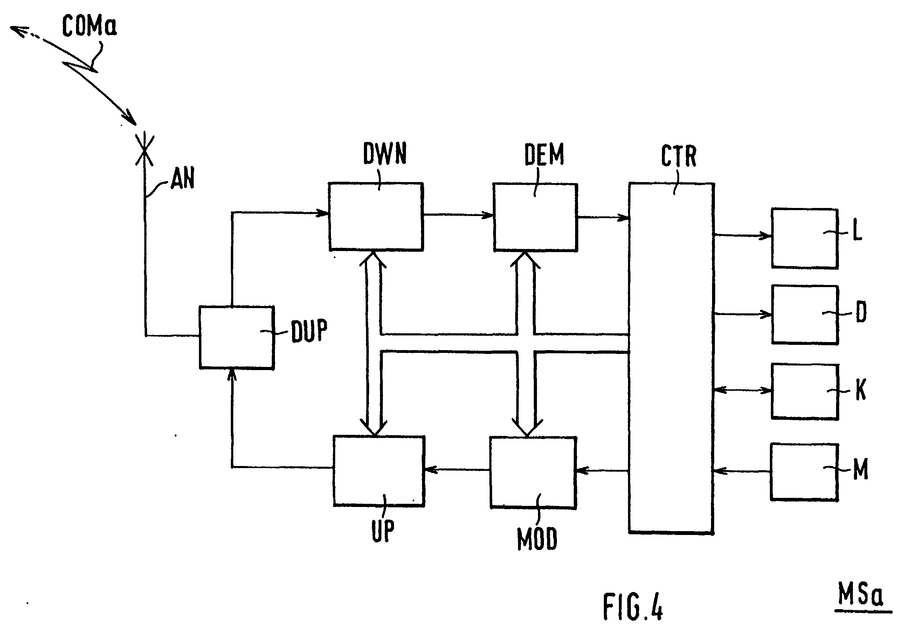

In Fig. 4 ist eine erfindungsgemäße Mobilstation MSa gezeigt, die eine Antenne AN und einen daran angeschlossenen Duplexer DUP enthält. Weiterhin enthält die Mobilstation Empfangsmittel und Sendemittel, die dem Duplexer nach bzw. vorgeschaltet sind. Die Empfangsmittel enthalten einen Abwärtsmischer DWN und eine Demodulationsstufe DEM, die Sendemittel enthalten eine Modulationsstufe MOD und einen Aufwärtsmischer UP. Die Empfangsmittel und Sendemittel werden von einer Steuerschaltung CTR gesteuert. An diese Steuerschaltung sind neben den Empfangs- und Sendemitteln auch Ausgabegeräte wie beispielsweise ein Lautsprecher L, ein Anzeigefeld (Display) D, eine Tastatur K und ein Mikrophon M angeschlossen. Die in Fig. 4 dargestellten Empfangsmittel und Sendemittel der Mobilstation sind auf die von der Funkfeststation vorgegebenen Parameter einstellbar. Die Sende- und Empfangsmittel zur Signalisierung sind nicht dargestellt. Zur Anforderung eines Funkdienstes wählt der Teilnehmer menügeführt mittels des Displays und der Tastatur einen bestimmten Funkdienst und eine zugeordnete Qualität aus. Danach veranlaßt die Steuerschaltung CTR eine Signalisierung an die Funkfeststation, worin beispielsweise die Kennung des Funkdienstes und die gewünschte Übertragungskapazität mitgeteilt wird, welche für die Durchführung des ausgewählten Funkdienstes mit dieser Qualität benötigt wird. Kann die gewünschte Übertragungskapazität (Kanalkapazität) bereitgestellt werden, so signalisiert die Funkfeststation die entsprechenden Parameter, welche zur Einstellung der Empfangsund Sendemittel in der Mobilstation notwendig sind. Mittels der Steuerschaltung CTR stellt die Mobilstation ihre Sende- und Empfangsmittel auf die Parameter ein, die die Funkschnittstelle COMa vorgibt.

Kann eine vom Teilnehmer gewünschte Übertragungskapazität nicht bereitgestellt werden, so signalisiert dies die Funkfeststation an die entfernte Funkstation (Mobilstation). Kann jedoch der gewünschte Funkdienst mit einer kleineren Übertragungskapazität durchgeführt werden, wobei eine Mindestqualität gegeben ist, so signalisiert die Funkfeststation ein Angebot an die Mobilstation MSa, das auf dem Display angezeigt wird. Der Teilnehmer kann das Angebot über die Tastatur K annehmen. Nach Annahme des Angebots stellt die Steuerschaltung CTR die Sendemittel und die Empfangsmittel auf die zuletzt angebotenen Parameter ein.

Während der Durchführung der Funkdienste ermittelt die Steuerschaltung CTR fortlaufend die zur Ein- und Ausgabe der Nachrichtensignale benötigte Übertragungskapazität. Änderungen des Bedarfs an Übertragungskapazität werden an die Funkfeststation signalisiert, die danach die Parameter zur Einstellung der Sende- und Empfangsmittel entsprechend der geänderten Übertragungskapazität anpaßt. Neben der schon genannten hohen Ausnutzung des Frequenzspektrums wird somit auch eine möglichst geringe Belastung der Umgebung durch abgestrahlte Funkwellen erzielt (Elektrosmog). Weiterhin können neben den hier näher beschriebenen Vorgaben und Änderungen von Zeit- Frequenz- und Codekanälen auch Vorgaben und für Änderungen der Modulation (Modulationstiefe), der Quellcodierung und der Kanalcodierung erfolgen. Darüberhinaus ist auch eine Sendeleistungsregelung denkbar, die sich an die aktuellen Bedarfsanforderungen der Mobilstationen (geforderter minimaler Signal-Rausch-Abstand/Bitfehlerrate) anpaßt.

Das hier gezeigte Mobilfunksystem ist eine besonders vorteilhafte Ausführung der Erfindung. Es sind auch Funksysteme denkbar, die stationäre entfernte Funkstationen enthalten wie z.B. drahtlos vernetzte Rechnersysteme oder Bürokommunikationssysteme. Der Einsatz der Erfindung ist insbesondere auf dem Gebiet der Funkübertragung für Multimedia-Anwendungen interessant, wo beachtliche Schwankungen der erforderlichen Funkübertragungskapazität (Nachrichtenübertragungsrate) auftreten.

## Patentansprüche

1. Funksystem (MRS) mit mindestens einer Funkfeststation (BS) und entfernten Funkstationen (MSa, MSb, MSc), die Sendemittel (MOD, UP) und Empfangsmittel (DWN, DEM) enthalten zur Funkübertragung von Nutzinformationen über Funkschnittstellen (COMa, COMb, COMc), deren jeweilige Übertragungskapazität die Funkfeststation (BS) verändert aufgrund von Anforderungen, die die entfernten Funkstationen (MSa, MSb, MSc) mitteilen und aufgrund einer Überwachung von bestehenden Funkübertragungen im Funkfeldbereich (RC) der Funkfeststation (BS), bei welchem Funksystem die Funkfeststation (BS) zur Änderung der jeweiligen Übertragungskapazität veränderbare Parameter der Funkschnittstellen (COMa, COMb, COMc) vorgibt, die die Modulation und die Demodulation für die Sendemittel (MOD, UP) bzw. für die Empfangsmittel (DWN, DEM) angeben, **dadurch gekennzeichnet, daß** die Sendemittel (MOD, UP) und die Empfangsmittel (DWN, DEM) zumindest der Funkfeststation (BS) einstellbar sind zur Funkübertragung nach unterschiedlichen Übertragungsverfahren.

2. Funksystem (MRS) mit mindestens einer Funkfeststation (BS) und entfernten Funkstationen (MSa, MSb, MSc), die Sendemittel (MOD, UP) und Empfangsmittel (DWN, DEM) enthalten zur Funkübertragung von Nutzinformationen nach mindestens einem Mehrfachszugriffsverfahren über Funkschnittstellen (COMa, COMb, COMc), deren jeweilige Übertragungskapazität die Funkfeststation (BS) verändert aufgrund von Anforderungen, die die entfernten Funkstationen (MSa, MSb, MSc) mitteilen und aufgrund einer Überwachung von bestehenden Funkübertragungen im Funkfeldbereich (RC) der Funkfeststation (BS), bei welchem Funksystem die Funkfeststation (BS) zur Funkübertragung nach dem mindestens einen Mehrfachzugriffsverfahren den entfernten Funkstationen (MSa, MSb, MSc) Funkkanäle mit veränderbaren Kanalkapazitäten (Übertragungskapazitäten) zuteilt, indem sie veränderbare Parameter der Funkschnittstellen (COMa, COMb, COMc) vorgibt, die FDMA-Frequenzlagen (Fa) und/oder CDMA-Kodierungen (Cc1) angeben, **dadurch gekennzeichnet, daß** die Sendemittel (MOD, UP) und die Empfangsmittel (DWN, DEM) zumindest der Funkfeststation (BS) einstellbar sind zur Funkübertragung nach unterschiedlichen Übertragungsverfahren.

3. Funksystem (MRS) nach Anspruch 1 oder 2, **dadurch gekennzeichnet, daß** die Funkfeststation (BS) zur Funkübertragung eine veränderbare Signalverarbeitung in den Sendemitteln (MOD, UP) und eine veränderbare Signalverarbeitung in den Empfangsmittel (DWN, DEM) dadurch bewirkt, daß sie auch die veränderbaren Parameter der Funkschnittstellen (COMa, COMb, COMc) vorgibt, die die Signalkodierung bzw. Signaldekodierung angeben.

4. Funksystem (MRS) nach Anspruch 1 oder 2, **dadurch gekennzeichnet, daß** jede entfernte Funkstation (MSa) eine mit ihren Sendemitteln (MOD, UP) verbundene Steuerschaltung (CTR) enthält, mittels derer sie die Anforderung einer gewünschten Übertragungskapazität (CAPr) für die Funkübertragung der Nutzinformationen signalisiert, und daß die Funkfeststation (BS) eine mit ihren Empfangsmitteln (DWN) verbundene Überwachungsschaltung (ANA) enthält, mittels derer sie freie Übertragungskapazitäten (CAPl) innerhalb eines für die Funkübertragung vorgegebenen Frequenzbereiches ermittelt.

5. Funksystem (MRS) nach Anspruch 1 oder 2, **dadurch gekennzeichnet, daß** die Funkfeststation (BS) eine mit ihren Sendemitteln und Empfangsmitteln verbundene Auswerteschaltung (RCC) enthält, mittels derer sie für jede anfordernde entfernte Funkstation (MSa) die veränderbaren Parameter (Ta, Fa) mindestens einer der Funkschnittstellen (COMa) zur Zuteilung der gewünschten Übertragungskapazität (CAPr) so vorgibt und verändert, daß möglichst geringe und wenige der freien Übertragungskapazitäten (CAPl) belegt werden und daß mittels der Auswerteschaltung (RCC) die Funkfeststation (BS) ihre Sendemittel und Empfangsmittel auf diese veränderbaren Parameter (Ta, Fa) einstellt und diese veränderbaren Parameter an die anfordernde entfernte Funkstation (MSa) zur Einstellung ihrer Sendemittel und Empfangsmittel signalisiert.

6. Funksystem (MRS) nach Anspruch 4, **dadurch gekennzeichnet, daß** zur Durchführung mindestens eines Funkdienstes (TEL, FAX, VIDEO) die entfernte Funkstation (MSa) Ein-/Ausgabegeräte (L, D, M, K) enthält, die mit der Steuerschaltung (CTR) verbunden sind und mittels denen ein Teilnehmer diesen Funkdienst (FAX) anfordert und in Anspruch nimmt und daß die Steuerschaltung (CTR) die gewünschte Übertragungskapazität (CAPr) ermittelt aufgrund einer Mindestqualität, die der Teilnehmer für den Funkdienst (FAX) anfordert und/oder aufgrund einer Mindestübertragungskapazität, die eine fehlerfreie Signalverarbeitung in den Ein-/Ausgabegeräten (L, D, M) erfordert.

7. Funksystem (MRS) nach Anspruch 4, **dadurch gekennzeichnet, daß** die entfernte Funkstation (MSa) fortlaufend diejenige gewünschte Übertragungskapazität (CAPr) anfordert, die die Steuerschaltung (CTR) aufgrund von Änderungen des Informationsgehaltes der Nutzinformationen ermittelt.

8. Funkfeststation (BS), die Sendemittel (MOD, UP) und Empfangsmittel (DWN, DEM) enthält zur Funkübertragung von Nutzinformationen zwischen ihr und entfernten Funkstationen (MSa, MSb, MSc) über Funkschnittstellen (COMa, COMb, COMc), deren jeweilige Übertragungskapazität die Funkfeststation (BS) verändert aufgrund von Anforderungen, die die entfernten Funkstationen (MSa, MSb, MSc) mitteilen und aufgrund einer Überwachung von bestehenden Funkübertragungen im Funkfeldbereich (RC) der Funkfeststation (BS), welche Funkfeststation (BS) zur Änderung der jeweiligen Übertragungskapazität veränderbare Parameter der Funkschnittstellen (COMa, COMb, COMc) vorgibt, die die Modulation und die Demodulation für die Sendemittel (MOD, UP) bzw. für die Empfangsmittel (DWN, DEM) angeben, **dadurch gekennzeichnet, daß** die Sendemittel (MOD, UP) und die Empfangsmittel (DWN, DEM) zumindest der Funkfeststation (BS) einstellbar sind zur Funkübertragung nach unterschiedlichen Übertragungsverfahren.

9. Funkfeststation (BS), die Sendemittel (MOD, UP) und Empfangsmittel (DWN, DEM) enthält zur Funkübertragung von Nutzinformationen zwischen ihr und entfernten Funkstationen (MSa, MSb, MSc) nach mindestens einem Mehrfachszugriffsverfahren über Funkschnittstellen (COMa, COMb, COMc), deren jeweilige Übertragungskapazität die Funkfeststation (BS) verändert aufgrund von Anforderungen, die die entfernten Funkstationen (MSa, MSb, MSc) mitteilen und aufgrund einer Überwachung von bestehenden Funkübertragungen im Funkfeldbereich (RC) der Funkfeststation (BS), welche Funkfeststation (BS) zur Funkübertragung nach dem mindestens einen Mehrfachzugriffsverfahren den entfernten Funkstationen (MSa, MSb, MSc) Funkkanäle mit veränderbaren Kanalkapazitäten (Übertragungskapazitäten) zuteilt, indem sie veränderbare Parameter der Funkschnittstellen (COMa, COMb, COMc) vorgibt, die FDMA-Frequenzlagen (Fa) und/oder CDMA-Kodierungen (Cc1) angeben, **dadurch gekennzeichnet, daß** die Sendemittel (MOD, UP) und die Empfangsmittel (DWN, DEM) zumindest der Funkfeststation (BS) einstellbar sind zur Funkübertragung nach unterschiedlichen Übertragungsverfahren.

10. Funkfeststation (BS) nach Anspruch 8 oder 9, **dadurch gekennzeichnet, daß** die Funkfeststation aufgrund der Anforderung einer gewünschten Übertragungskapazität (CAPr), die eine der entfernten Funkstationen (MS) anfordert, die veränderbaren Parameter (T2, F2) vorgibt und verändert dadurch, daß die Funkfeststation eine mit ihren Empfangsmitteln (DWN) verbundene Überwachungsschaltung (ANA) enthält, mittels derer sie innerhalb eines vorgegebenen Frequenzbereiches bestehende Funkübertragungen überwacht und freie Übertragungskapazitäten (CAPr) ermittelt und dadurch, daß die Funkfeststation eine mit ihren Sendemitteln und Empfangsmitteln verbundene Auswerteschaltung (RCC) enthält, mittels derer sie die veränderbaren Parameter (Ta, Fa) der Funkschnittstelle (COMa) ermittelt, ihre Sendemittel und Empfangsmittel nach diesen Parametern einstellt und diese Parameter an die entfernte Funkstation (MSa) für deren Einstellung signalisiert, so daß zur Zuteilung der gewünschten Übertragungskapazität (CAPr) möglichst geringe und wenige der freien Übertragungskapazitäten (CAPl) belegt werden.

11. Entfernte Funkstation (MSa), die Sendemittel (MOD, UP) und Empfangsmittel (DWN, DEM) enthält zur Funkübertragung von Nutzinformationen zwischen ihr und einer Funkfeststation (BS) über eine Funkschnittstelle (COMa), deren Übertragungskapazität die Funkfeststation verändert aufgrund von Anforderungen, die die entfernte Funkstation (Msa) mitteilt, und aufgrund einer Überwachung von bestehenden Funkübertragungen im Funkfeldbereich (RC) der Funkfeststation, welche Sendemittel (MOD, UP) und Empfangsmittel (DWN, DEM) einstellbar sind auf veränderbare Parameter (Ta, Fa), die die Funkfeststation (BS) vorgibt und die die Modulation und die Demodulation für die Sendemittel (MOD, UP) bzw. für die Empfangsmittel (DWN, DEM) angeben, welche entfernte Funkstation (MSa) Ein-/Ausgabegeräte (L, D, M, K) enthält, mittels derer zur Funkübertragung ein Teilnehmer mindestens einen Funkdienst (FAX, VIDEO) anfordert und in Anspruch nimmt, und welche entfernte Funkstation (MSa) eine mit den Ein-/Ausgabegeräten, den Sendemitteln (MOD, UP) und den Empfangsmitteln (DWN, DEM) verbundene Steuerschaltung (CTR) enthält, mittels derer sie eine für die Funkübertragung gewünschte Übertragungskapazität (CAPr) ermittelt und der Funkfeststation (BS) eine Anforderung dieser gewünschten Übertragungskapazität (CAPr) mitteilt, **dadurch gekennzeichnet, daß** die Sendemittel (MOD, UP) und die Empfangsmittel (DWN, DEM) einstellbar sind zur Funkübertragung nach unterschiedlichen Übertragungsverfahren.

12. Entfernte Funkstation (MSa), die Sendemittel (MOD, UP) und Empfangsmittel (DWN, DEM) enthält zur Funkübertragung von Nutzinformationen zwischen ihr und einer Funkfeststation (BS) nach mindestens einem Mehrfachzugriffsverfahren über eine Funkschnittstelle (COMa), deren Übertragungskapazität die Funkfeststation verändert aufgrund von Anforderungen, die die entfernte Funkstation (Msa) mitteilt, und aufgrund einer Überwachung von bestehenden Funkübertragungen im Funkfeldbereich (RC) der Funkfeststation, welche Sendemittel (MOD, UP) und Empfangsmittel (DWN, DEM) einstellbar sind auf veränderbare Parameter (Ta, Fa), die die Funkfeststation (BS) vorgibt und die eine FDMA-Frequenzlage und/oder eine CDMA-Kodierung für einen Funkkanal mit einer Kanalkapazität angeben, die dieser Übertragungskapazität entspricht, und welche entfernte Funkstation (MSa) Ein-/Ausgabegeräten enthält, mittels derer zur Funkübertragung ein Teilnehmer mindestens einen Funkdienst (FAX, VIDEO) anfordert und in Anspruch nimmt, und welche entfernte Funkstation (MSa) eine mit den Ein-/Ausgabegeräten, den Sendemitteln (MOD, UP) und den Empfangsmitteln (DWN, DEM) verbundene Steuerschaltung (CTR) enthält, mittels derer sie eine für die Funkübertragung gewünschte Übertragungskapazität (CAPr) ermittelt und der Funkfeststation (BS) eine Anforderung dieser gewünschten Übertragungskapazität (CAPr) mitteilt, **dadurch gekennzeichnet, daß** die Sendemittel (MOD, UP) und die Empfangsmittel (DWN, DEM) einstellbar sind zur Funkübertragung nach unterschiedlichen Übertragungsverfahren.

13. Entfernte Funkstation (MSa) nach Anspruch 11 oder 12, **dadurch gekennzeichnet, daß** die Steuerschaltung (CTR) die gewünschte Übertragungskapazität (CAPr) ermittelt aufgrund einer Mindestqualität, die der Teilnehmer für den Funkdienst anfordert, und/oder aufgrund einer Mindestübertragungskapazität, die eine fehlerfreie Signalverarbeitung in den Ein-/Ausgabegeräten erfordert und daß die Steuerschaltung (CTR) die Sendemittel und Empfangsmittel auf die von der Funkfeststation vorgegebenen und veränderten Parametern (Ta, Fa) einstellt.

14. Funkschnittstelle (COMa) zur Funkübertragung in einem Funksystem (MRS) zwischen einer Funkfeststation (BS) und einer entfernten Funkstation (MSa) welche Funkschnittstelle (COMa) veränderbare Parameter (Ta, Fa) aufweist, die die Modulation und die Demodulation für die Funkübertragung angeben und die somit die Übertragungskapazität der Funkübertragung bestimmen, **dadurch gekennzeichnet, daß** die veränderbaren Parameter zur Einstellung der Sendemittel (MOD, UP) und der Empfangsmittel (DWN, DEM) zur Funkübertragung nach unterschiedlichen Übertragungsverfahren dienen.

15. FDMA- und/oder CDMA-Funkschnittstelle (COMc) zur Funkübertragung in einem Funksystem (MRS) zwischen einer Funkfeststation (BS) und einer (MSc) von mehreren entfernten Funkstationen, welche Funkschnittstelle (COMc) veränderbare Parameter aufweist, die eine FDMA-Frequenzlage und/oder eine CDMA-Kodierung (Cc1) angeben und die somit die Übertragungskapazität der Funkübertragung bestimmen, **dadurch gekennzeichnet, daß** die veränderbaren Parameter zur Einstellung der Sendemittel (MOD, UP) und der Empfangsmittel (DWN, DEM) zur Funkübertragung nach unterschiedlichen Übertragungsverfahren dienen.

16. Verfahren zur Funkübertragung in einem Funksystem (MRS) zwischen einer Funkfeststation (BS) und einer entfernten Funkstation (MSa), bei welchem Verfahren die Funkübertragung über eine Funkschnittstelle (COMa) mit veränderbaren Parametern (Ta, Fa) erfolgt, die die Modulation und die Demodulation für die Funkübertragung und zur Änderung ihrer Übertragungskapazität angeben, und die von der Funkfeststation (BS) vorgegeben und verändert werden aufgrund von Anforderungen, die von der entfernten Funkstation (MSa) signalisiert werden und aufgrund einer Überwachung eines vorgegebenen Frequenzbereiches, die von der Funkfeststation (BS) ausgeführt wird, und mittels derer bestehende Funkübertragungen im Funkfeldbereich (RC) der Funkfeststation (BS) ermittelt werden, **dadurch gekennzeichnet, daß** die veränderbaren Parameter zur Einstellung der Sendemittel (MOD, UP) und der Empfangsmittel (DWN, DEM) zur Funkübertragung nach unterschiedlichen Übertragungsverfahren dienen.

17. Verfahren zur Funkübertragung nach mindestens einem Mehrfachzugriffsverfahren in einem Funksystem (MRS) zwischen einer Funkfeststation (BS) und einer (Msa) von mehreren entfernten Funkstationen, bei welchem Verfahren die Funkübertragung über eine Funkschnittstelle (COMa) mit veränderbaren Parametern (Ta, Fa) erfolgt, die eine FDMA-Frequenzlage und/oder eine CDMA-Kodierung zur Änderung der Übertragungskapazität (Kanalkapazität) der Funkübertragung angeben und die von der Funkfeststation (BS) vorgegeben und verändert werden aufgrund von Anforderungen, die von der entfernten Funkstation (MSa) signalisiert werden und aufgrund einer Überwachung eines vorgegebenen Frequenzbereiches, die von der Funkfeststation (BS) ausgeführt wird, und mittels derer bestehende Funkübertragungen im Funkfeldbereich (RC) der Funkfeststation (BS) ermittelt werden, **dadurch gekennzeichnet, daß** die veränderbaren Parameter zur Einstellung der Sendemittel (MOD, UP) und der Empfangsmittel (DWN, DEM) zur Funkübertragung nach unterschiedlichen Übertragungsverfahren dienen.

18. Verfahren nach Anspruch 16 oder 17, **dadurch gekennzeichnet, daß** von der entfernten Funkstation (MSa) eine gewünschte Übertragungskapazität (CAPr) für eine Funkübertragung angefordert wird, und daß von der Funkfeststation (BS) freie Übertragungskapazitäten (CAPl) mittels der Überwachung des vorgegebenen Frequenzbereiches ermittelt und die veränderbaren Parameter (Ta, Fa) zur Zuteilung der gewünschten Übertragungskapazität (CAPr) so vorgegeben und verändert werden, daß möglichst geringe und wenige der freien Übertragungskapazitäten (CAPl) belegt werden.

19. Verfahren nach Anspruch 18, **dadurch gekennzeichnet, daß** zwischen der Funkfeststation (BS) und der entfernten Funkstation (MSa) vereinbart wird, keine Funkübertragung oder eine Funkübertragung mit einer Mindestqualität durchzuführen, falls die gewünschte Übertragungskapazität (CAPr) größer als die freien Übertragungskapazitäten (CAPl) ist, wobei von der Funkfeststation (BS) die veränderbaren Parameter (Ta, Fa) so vorgegeben werden, daß diese Mindestqualität gewährleistet ist.

## Claims

1. Radio system (MRS) with at least one radio base station (BS) and remote radio stations (MSa, MSb, MSc), which contain means of sending (MOD, UP) and receiving (DWN, DEM) for radio transmission of user data over radio interfaces (COMa, COMb, COMc), whose respective transmission capacity the radio base station (BS) modifies according to requests that the remote radio stations (MSa, MSb, MSc) communicate, and according to a monitoring of existing radio transmissions in the radio broadcasting area (RC) of the radio base station (BS), in which radio system the radio base station (BS), to change the respective transmission capacity, defines modifiable parameters of the radio interfaces (COMa, COMb, COMc), which specify the modulation and demodulation for the sending means (MOD, UP)and the receiving means (DWN, DEM), **characterized in that** the sending means (MOD, UP)and the receiving means (DWN, DEM) at least of the radio base station (BS) are configurable for radio transmission according to different transmission methods.

2. Radio system (MRS) with at least one radio base station (BS) and remote radio stations (MSa, MSb, MSc), which contain means of sending (MOD, UP) and receiving (DWN, DEM) for radio transmission of user data according to at least one multiple-access method over radio interfaces (COMa, COMb, COMc), whose respective transmission capacity the radio base station (BS) modifies according to requests that the remote radio stations (MSa, MSb, MSc) communicate, and according to a monitoring of existing radio transmissions in the radio broadcasting area (RC) of the radio base station (BS), in which radio system the radio base station (BS), for radio transmission according to the at least one multiple-access method, allocates radio channels with modifiable channel capacities (transmission capacities) to the remote radio stations (MSa, MSb, MSc), by defining modifiable parameters for the radio interfaces (COMa, COMb, COMc), which specify FDMA frequencies (Fa) and/or CDMA codings (Cc1), **characterized in that** the sending means (MOD, UP)and the receiving means (DWN, DEM) at least of the radio base station (BS) are configurable for radio transmission according to different transmission methods.

3. Radio system (MRS) as claimed in Claim 1 or 2, **characterized in that** the radio base station (BS), for radio transmission, effects modifiable signal processing in the sending means (MOD, UP) and modifiable signal processing in the receiving means (MOD, UP) by also defining the modifiable parameters of the radio interfaces (COMa, COMb, COMc), which specify the signal encoding and decoding.

4. Radio system (MRS) as claimed in Claim 1 or 2, **characterized in that** each remote radio station (MSa) contains linked to its sending means (MOD, UP) a control circuit (CTR), by means of which it signals the request for a desired transmission capacity (CAPr) for the radio transmission of user data, and that the radio base station (BS) contains linked to its receive means (DWN) a monitoring circuit (ANA), by means of which it determines free transmission capacities (CAPl) within a frequency range predefined for the radio transmission.

5. Radio system (MRS) as claimed in Claim 1 or 2, **characterized in that** the radio base station (BS) contains linked to its sending and receiving means an evaluation circuit (RCC), by means of which, for each requesting remote radio station (MSa), it defines and modifies the modifiable parameters (Ta, Fa) of at least one of the radio interfaces (COMa) for allocation of the desired transmission capacity (CAPr), in such a way that the lowest and least possible of the free transmission capacities (CAPl) are reserved, and that by means of the evaluation circuit (RCC) the radio base station (BS) configures its sending and receiving means to these modifiable parameters (Ta, Fa) and signals these modifiable parameters to the requesting remote radio station (MSa) for configuring its sending and receiving means.

6. Radio system (MRS) as claimed in Claim 4, **characterized in that** to implement at least one radio communication service (TEL, FAX, VIDEO) the remote radio station (MSa) contains input/output devices (L, D, M, K), which are connected to the control circuit (CTR) and by means of which a user requests and takes up this radio communication service (FAX), and that the control circuit (CTR) determines the desired transmission capacity (CAPr) based on a minimum quality that the user requests for the radio communication service (FAX) and/or based on a minimum transmission capacity that error-free signal processing in the input/output devices requires.

7. Radio system (MRS) as claimed in Claim 4, **characterized in that** the remote radio station (MSa) continually requests the desired transmission capacity (CAPr) that the control circuit (CTR) determines as a result of changes in the information content of the user data.

8. Radio base station (BS), which contains means of sending (MOD, UP) and receiving (DWN, DEM) for radio transmission of user data between it and remote radio stations (MSa, MSb, MSc) over radio interfaces (COMa, COMb, COMc), whose respective transmission capacity the radio base station (BS) modifies according to requests that the remote radio stations (MSa, MSb, MSc) communicate, and according to a monitoring of existing radio transmissions in the radio broadcasting area (RC) of the radio base station (BS), which radio base station (BS), to change the respective transmission capacity, defines modifiable parameters of the radio interfaces (COMa, COMb, COMc), which specify the modulation and demodulation for the sending means (MOD, UP)and the receiving means (DWN, DEM), **characterized in that** the sending means (MOD, UP)and the receiving means (DWN, DEM) at least of the radio base station (BS) are configurable for radio transmission according to different transmission methods.

9. Radio base station (BS) which contains means of sending (MOD, UP) and receiving (DWN, DEM) for radio transmission of user data between it and remote radio stations (MSa, MSb, MSc) according to at least one multiple-access method over radio interfaces (COMa, COMb, COMc), whose respective transmission capacity the radio base station (BS) modifies according to requests that the remote radio stations (MSa, MSb, MSc) communicate, and according to a monitoring of existing radio transmissions in the radio broadcasting area (RC) of the radio base station (BS), which radio base station (BS), for radio transmission according to the at least one multiple-access method, allocates radio channels with modifiable channel capacities (transmission capacities) to the remote radio stations (MSa, MSb, MSc), by defining modifiable parameters for the radio interfaces (COMa, COMb, COMc), which specify FDMA frequencies (Fa) and/or CDMA codings (Cc1), **characterized in that** the sending means (MOD, UP)and the receiving means (DWN, DEM) at least of the radio base station (BS) are configurable for radio transmission according to different transmission methods.

10. Radio base station (BS) as claimed in Claim 8 or 9, **characterized in that** based on the request for a desired transmission capacity (CAPr), requested by one of the remote radio stations (MS), the radio base station defines and modifies the modifiable parameters (T2, F2), based on the fact that the radio base station contains a monitoring circuit (ANA) connected to its receiving means (DWN), by means of which it monitors existing radio transmissions within a predefined frequency range and determines free transmission capacity (CAPr), and based on the fact that the radio base station contains an evaluation circuit (RCC) connected to its sending and receiving means, by means of which it determines the modifiable parameters (Ta, Fa) of the radio interface (COMa), configures its sending and receiving means according to these parameters and signals these parameters to the remote radio station (MSa) for its configuration, so that to allocate the desired transmission capacity (CAPr) the lowest and least possible of the free transmission capacities (CAPl) are reserved.

11. Remote radio station (MSa), which contains sending means (MOD, UP) and receiving means (DWN, DEM) for radio transmission of user data between it and a radio base station (BS) over a radio interface (COMa), whose transmission capacity the radio base station modifies on the basis of requests that the remote radio station (Msa) communicates, and on the basis of monitoring existing radio transmissions in the radio broadcasting area (RC) of the radio base station, which sending means (MOD, UP) and receiving means (DWN, DEM) are configurable to modifiable parameters (Ta, Fa), which the radio base station (BS) defines and which specify the modulation and the demodulation for the sending means (MOD, UP) and receiving means (DWN, DEM) respectively, which remote radio station (MSa) contains input/output devices (L, D, M, K), by means of which a user requests and takes up at least one radio communication service (FAX, VIDEO) for radio transmission, and which remote radio station (MSa) contains a control circuit (CTR) connected to the input/output devices, the sending means (MOD, UP) and the receiving means (DWN, DEM), by means of which control circuit it determines a desired transmission capacity (CAPr) for the radio transmission and sends the radio base station (BS) a request for this desired transmission capacity (CAPr), **characterized in that** the sending means (MOD, UP) and the receiving means (DWN, DEM) are configurable for radio transmission according to different transmission methods.

12. Remote radio station (MSa), which contains sending means (MOD, UP) and receiving means (DWN, DEM) for radio transmission of user data between it and a radio base station (BS) according to at least one multiple-access method over a radio interface (COMa), whose transmission capacity the radio base station modifies on the basis of requests that the remote radio station (Msa) communicates, and on the basis of monitoring of existing radio transmissions in the radio broadcasting area (RC) of the radio base station, which sending means (MOD, UP) and receiving means (DWN, DEM) are configurable to modifiable parameters (Ta, Fa), which the radio base station (BS) defines and which specify an FDMA frequency range and/or a CDMA coding for a radio channel with a channel capacity that corresponds to this transmission capacity, and which remote radio station (MSa) contains input/output devices by means of which a user requests and takes up at least one radio communication service (FAX, VIDEO) for radio transmission, and which remote radio station (MSa) contains a control circuit (CTR) connected to the input/output devices, the sending means (MOD, UP) and the receiving means (DWN, DEM), by means of which control circuit it determines a desired transmission capacity (CAPr) for the radio transmission and sends the radio base station (BS) a request for this desired transmission capacity (CAPr), **characterized in that** the sending means (MOD, UP) and the receiving means (DWN, DEM) are configurable for radio transmission according to different transmission methods.

13. Remote radio station (MSa) as claimed in Claim 11 or 12, **characterized in that** the control circuit (CTR) determines the desired transmission capacity (CAPr) based on a minimum quality, which the user requests for the radio communication service, and/or based on a minimum transmission capacity that error-free signal processing in the input/output devices requires, and that the control circuit (CTR) configures the sending and receiving means to the parameters (Ta, Fa) defined and modified by the radio base station.

14. Radio interface (COMa) for radio transmission in a radio system (MRS) between a radio base station (BS) and a remote radio station (MSa) which radio interface (COMa) presents modifiable parameters (Ta, Fa), which specify the modulation and the demodulation for the radio transmission and thus decide the transmission capacity of the radio transmission, **characterized in that** the modifiable parameters serve for configuring the sending means (MOD, UP) and receiving means (DWN, DEM) for radio transmission according to different transmission methods.

15. FDMA and/or CDMA radio interface (COMc) for radio transmission in a radio system (MRS) between a radio base station (BS) and one (MSc) of several remote radio stations, which radio interface (COMc) presents modifiable parameters, which specify an FDMA frequency range and/or a CDMA coding (Cc1) and thus decide the transmission capacity of the radio transmission, **characterized in that** the modifiable parameters serve for configuring the sending means (MOD, UP) and receiving means (DWN, DEM) for radio transmission according to different transmission methods.

16. Method for radio transmission in a radio system (MRS) between a radio base station (BS) and a remote radio station (MSa), in which method the radio transmission is over a radio interface (COMa) with modifiable parameters (Ta, Fa), which specify the modulation and the demodulation for the radio transmission and for changing its transmission capacity, and which are predefined by and modified by the radio base station (BS) on the basis of requests that are signaled from the remote radio station (MSa) and on the basis of a monitoring of a predefined frequency range, which monitoring is executed by the radio base station (BS), and by means of which existing radio transmissions in the radio broadcasting area (RC) of the radio base station (BS) are determined, **characterized in that** the modifiable parameters serve for configuring the sending means (MOD, UP) and receiving means (DWN, DEM) for radio transmission according to different transmission methods.

17. Method for radio transmission according to at least one multiple-access method in a radio system (MRS) between a radio base station (BS) and one (Msa) of several remote radio stations, in which method the radio transmission is over a radio interface (COMa) with modifiable parameters (Ta, Fa), which specify an FDMA frequency range and/or a CDMA coding for changing the transmission capacity (channel capacity) of the radio transmission, and which are predefined by and modified by the radio base station (BS) on the basis of requests that are signaled from the remote radio station (MSa) and on the basis of a monitoring of a predefined frequency range, which monitoring is executed by the radio base station (BS), and by means of which existing radio transmissions in the radio broadcasting area (RC) of the radio base station (BS) are determined, **characterized in that** the modifiable parameters serve for configuring the sending means (MOD, UP) and receiving means (DWN, DEM) for radio transmission according to different transmission methods.

18. Method as claimed in Claim 16 or 17, **characterized in that** a desired transmission capacity (CAPr) is requested by the remote radio station (MSa) for a radio transmission, and that free transmission capacities (CAPl) are determined by the radio base station (BS) by means of the monitoring of the predefined frequency range, and the modifiable parameters (Ta, Fa) for allocating the desired transmission capacity (CAPr) are so predefined and modified that the lowest and least possible of the free transmission capacities (CAPl) are reserved.

19. Method as claimed in Claim 18, **characterized in that** it is agreed between the radio base station (BS) and the remote radio station (MSa) that no radio transmission or a minimum-quality radio transmission will be executed, if the desired transmission capacity (CAPr) is greater that the free transmission capacity (CAPl), the modifiable parameters (Ta, Fa) being predefined by the radio base station (BS) such that this minimum quality is ensured.

## Revendications

1. Système radio (MRS) avec au moins une station radio fixe (BS) et des stations radio distantes (Msa, MSb, MSc), comprenant des moyens d'émission (MOD, UP) et des moyens de réception (DWN, DEM) pour la transmission radio d'informations utiles par des interfaces radio (COMa, COMb COMc), dont la capacité de transmission respective est modifiée par la station radio fixe (BS) en fonction des demandes communiquées par les stations radio distantes (Msa, MSb, MSc) et en fonction d'une surveillance des transmissions radio existantes dans la zone de bond radio (RC) de la station radio fixe (BS), dans ledit système radio, la station radio fixe (BS) spécifie pour le changement de la capacité respective de transmission des paramètres modifiables des interfaces (COMa, COMb, COMc), qui indiquent la modulation et la démodulation pour les moyens d'émission (MOD, UP) et pour les moyens de réception (DWN, DEM), **caractérisé en ce que** les moyens d'émission (MOD, UP) et les moyens de réception (DWN, DEM) de la station radio fixe (BS) au moins sont réglables pour la transmission radio selon différents procédés de transmission.

2. Système radio (MRS) avec au moins une station radio fixe (BS) et des stations radio distantes (Msa, MSb, MSc), comprenant des moyens d'émission (MOD, UP) et des moyens de réception (DWN, DEM) pour la transmission radio d'informations utiles selon au moins un procédé à accès multiple par des interfaces radio (COMa, COMb, COMc), dont la capacité de transmission respective est modifiée par la station radio fixe (BS) en fonction des demandes que communiquent les stations radio distantes (Msa, MSb, MSc) et en fonction d'une surveillance des transmissions existantes dans la zone de bond radio (RC) de la station radio fixe (BS), dans ce système radio la station radio fixe (BS) répartit pour la transmission radio, selon au moins un des procédés à accès multiple, aux stations radio distantes (Msa, MSb, MSc) des canaux radio avec des capacités de canaux modifiables (capacités de transmission), en spécifiant des paramètres modifiables aux interfaces radio (COMa, COMb, COMc), qui indiquent des positions en fréquence FDMA (Fa) et/ou des codage CDMA (Cc1), **caractérisé en ce que** les moyens d'émission (MOD, UP) et les moyens de réception (DWN, DEM) de la station radio fixe (BS) au moins sont réglables pour la transmission radio selon différents procédés de transmission.

3. Système radio (MRS) selon la revendication 1 ou 2, **caractérisé en ce que** la station radio fixe (BS) pour la transmission radio effectue un traitement du signal modifiable dans les moyens d'émission (MOD, UP) et un traitement de signal modifiable dans les moyens de réception (DWN, DEM) en spécifiant également les paramètres modifiables des interfaces (COMa, COMb, COMc), qui indiquent le codage ou le décodage du signal.

4. Système radio (MRS) selon la revendication 1 ou 2, **caractérisé en ce que** chaque station radio distante (Msa) comprend un circuit de commande (CTR) relié à ses moyens d'émission (MOD, UP), au moyen duquel elle signalise la demande d'une capacité de transmission souhaitée (CAPr) pour la transmission radio des informations utiles et **en ce que** la station radio fixe (BS) comprend un circuit de surveillance (ANA) relié à ses moyens de réception (DWN), au moyen duquel elle détermine des capacités de transmission libres (CAP1) à l'intérieur d'une zone de fréquence spécifiée pour la transmission radio.

5. Système radio (MRS) selon la revendication 1 ou 2, **caractérisé en ce que** la station radio fixe (BS) contient un circuit d'évaluation (RCC) relié à ses moyens d'émission et de réception, au moyen duquel elle spécifie et modifie pour chaque station radio distante demandante (Msa) les paramètres modifiables (Ta, Fa) d'au moins un des interfaces (COMa) pour la répartition de la capacité de transmission souhaitée (CAPr) de telle sorte que le moins possible et les plus faibles capacités de transmission libres soient occupées et que, au moyen du circuit d'évaluation (RCC), la station radio fixe (BS) règle ses moyens d'émission et de réception sur les paramètres modifiables (Ta, Fa) et signalise ces paramètres modifiables à la station radio distante demandante (Msa) pour le réglage de ses moyens d'émission et de réception.

6. Système radio (MRS) selon la revendication 4, **caractérisé en ce que**, pour l'exécution d'au moins un service radio (TEL, FAX, VIDEO), la station radio distante (Msa) comprend des appareils d'entrée/de sortie (L, D, M, K), reliés au circuit de commande (CTR) et au moyen desquels un correspondant demande ce service (FAX) et le sollicite et **en ce que** le circuit de commande (CTR) détermine la capacité de transmission souhaitée (CAPr) en fonction d'une qualité minimale, que revendique le correspondant pour le service (FAX) et/ou en fonction d'une capacité de transmission minimale que nécessite un traitement sans erreur du signal dans les appareils d'entrée/de sortie (L, D, M).

7. Système radio (MRS) selon la revendication 4 **caractérisé en ce que** la station radio distante (Msa) demande continuellement la capacité de transmission souhaitée (CTR) que détermine le circuit de commande (CTR) en fonction des changements du contenu d'informations des informations utiles.

8. Station radio fixe (BS), comprenant des moyens d'émission (MOD, UP) et de réception (DWN, DEM) pour la transmission radio d'informations utiles entre elle et des stations radio distantes (Msa, MSb, MSc) par des interfaces (COMa, COMb, COMc), dont la capacité de transmission respective est modifiée par la station radio fixe (BS) en fonction des demandes que communiquent les stations radio distantes (Msa, MSb, MSc) et en fonction d'une surveillance des transmissions radio existantes dans la zone de bond radio (RC) de la station radio fixe (BS), ladite station qui spécifie pour la modification de chaque capacité de transmission des paramètres modifiables des interfaces (COMa, COMb, COMc), qui indiquent la modulation et la démodulation pour les moyens d'émission (MOD, UP) ou pour les moyens de réception (DWN, DEM), **caractérisée en ce que** les moyens d'émission (MOD, UP) et les moyens de réception (DWN, DEM) de la station radio fixe (BS) au moins sont réglables pour la transmission radio selon différents procédés de transmission.

9. Station radio fixe (BS), comprenant des moyens d'émission (MOD, UP) et de réception (DWN, DEM) pour la transmission radio d'informations utiles entre elle et des stations radio distantes (Msa, MSb, MSc) selon au moins un procédé à accès multiple par des interfaces (COMa, COMb, COMc), dont la capacité de transmission est modifiée par la station radio fixe (BS) en fonction des demandes que communiquent les stations radio distantes (Msa, MSb, MSc) et en fonction d'une surveillance des transmissions existantes dans la zone de bond radio (RC) de la station radio fixe (BS), ladite station fixe (BS) répartit pour la transmission selon au moins l'un des procédés à accès multiple aux stations radio distantes (Msa, MSb, MSC) des canaux avec des capacités de canal modifiables (capacités de transmission) en spécifiant des paramètres modifiables des interfaces (COMa, COMb, COMc), qui indiquent les positions de fréquence FDMA (Fa) et/ou les codages CDMA (Cc1), **caractérisée en ce que** les moyens d'émission (MOD, UP) et de réception (DWN, DEM) d'au moins la station radio fixe (BS) sont réglables pour la transmission selon différents procédés de transmission.

10. Station radio fixe (BS) selon la revendication 8 ou 9, **caractérisée en ce que** la station radio fixe spécifie et modifie en fonction de la demande d'une capacité de transmission souhaitée (CAPr) que demande une des stations distantes (MS), les paramètres modifiables (T2, F2) par le fait que la station radio fixe comprend un circuit de surveillance (ANA) relié à ses moyens de réception (DWN), au moyen duquel elle surveille à l'intérieur d'une zone de fréquence spécifiée des transmissions existantes et détermine des capacités de transmissions libres (CAPr) et par le fait que la station radio fixe comprend un circuit d'évaluation (RCC) relié à ses moyens d'émission et de réception, au moyen duquel elle détermine les paramètres modifiables (Ta, Fa) de l'interface radio (COMa), règle ses moyens d'émission et de réception selon ces paramètres signalise ceux-ci à la station radio distante (Msa) pour le réglage de ceux-ci, de telle sorte que pour la répartition de la capacité de transmission souhaitée (CAPr) le moins possible et les plus faibles capacités de transmission libres (CAP1) soit occupées.

11. Station radio distante (Msa), comprenant des moyens d'émission (MOD, UP) et de réception (DWN, DEM) pour la transmission radio d'information utile entre elle et une station radio fixe (BS) par un interface (COMa), dont la capacité de transmission est modifiée par la station radio fixe en fonction des demandes que communique la station radio distante (Msa) et en fonction d'une surveillance des transmissions existantes dans la zone de bond radio (RC) de la station radio fixe, lesdits moyens d'émission (MOD, UP) et de réception (DWN, DEM) étant réglables sur des paramètres modifiables (Ta, Fa), que spécifie la station radio fixe (BS) et qui indiquent la modulation et la démodulation pour les moyens d'émission (MOD, UP) ou pour les moyens de réception (DWN, DEM), ladite station radio distante (Msa) comprenant des appareils d'entrée/de sortie (L, D, M, K), au moyen desquels un correspondant demande au moins un service (FAX, VIDEO) pour la transmission et le sollicite, et ladite station radio distante (Msa) contenant un circuit de commande (CTR) relié aux appareils d'entrée/de sortie, aux moyens d'émission (MOD, UP) et de réception (DWN, DEM), au moyen desquels elle détermine une capacité de transmission (CAPr) souhaitée pour la transmission et communique à la station radio fixe (BS) une demande de cette capacité de transmission souhaitée, **caractérisée en ce que** les moyens d'émission (MOD, UP) et de réception (DWN, DEM) sont réglables pour la transmission selon différents procédés de transmission.

12. Station radio distante (Msa), comprenant des moyens d'émission (MOD, UP) et de réception (DWN, DEM) pour la transmission radio d'information utile entre elle et une station radio fixe (BS) selon au moins un procédé à accès multiple par un interface (COMa), dont la capacité de transmission est modifiée par la station radio fixe en fonction des demandes que communique la station radio distante (Msa) et en fonction d'une surveillance des transmissions existantes dans la zone de bond radio (RC) de la station radio fixe, lesdits moyens d'émission (MOD, UP) et de réception (DWN, DEM) étant réglables sur des paramètres modifiables (Ta, Fa), que spécifie la station radio fixe (BS) et qui indiquent une position de fréquence FDMA et/ou un codage CDMA pour un canal radio avec une capacité de canal, qui correspond à cette capacité de transmission et ladite station radio distante (Msa) comprenant des appareils d'entrée/de sortie (L, D, M, K), au moyen desquels un correspondant demande au moins un service (FAX, VIDEO) et le sollicite, et ladite station radio distante (Msa) comprenant un circuit de commande (CTR) relié aux appareils d'entrée/de sortie, aux moyens d'émission (MOD, UP) et de réception (DWN, DEM), au moyen desquels elle détermine une capacité de transmission (CAPr) souhaitée pour la transmission et communique à la station radio fixe (BS) une demande de cette capacité de transmission souhaitée (CAPr), **caractérisée en ce que** les moyens d'émission (MOD, UP) et de réception (DWN, DEM) sont réglables pour la transmission selon différents procédés de transmission.

13. Station radio distante (Msa) selon la revendication 11 ou 12, **caractérisée en ce que** le circuit de commande (CTR) détermine la capacité de transmission souhaitée (CAPr) en fonction d'une qualité minimale, que demande le correspondant pour le service, et/ou en fonction d'une capacité de transmission minimale, que nécessite un traitement sans erreur du signal dans les appareils d'entrée/de sortie et **en ce que** le circuit de commande (CTR) règle les moyens d'émission et de réception sur les paramètres (Ta, Fa) spécifiés et modifiés par la station radio fixe.

14. Interface (COMa) pour la transmission radio dans un système radio (MRS) entre une station radio fixe (BS) et une station radio distante (Msa), ledit interface (COMa) présentant des paramètres modifiables (Ta, Fa), qui indiquent la modulation et la démodulation pour la transmission et qui déterminent ainsi la capacité de transmission de la transmission radio, **caractérisé en ce que** les paramètres modifiables pour le réglage des moyens d'émission (MOD, UP) et de réception (DWN, DEM) servent à la transmission radio selon différents procédés de transmission.

15. Interface FDMA et/ou CDMA (COMc) pour la transmission radio dans un système radio (MRS) entre une station radio fixe (BS) et une (MSc) parmi plusieurs stations radio distantes, ledit interface (COMc) présentant des paramètres modifiables, qui indiquent une position de fréquence FDMA et/ou un codage CDMA (Cc1) et qui ainsi déterminent la capacité de transmission de la transmission radio, **caractérisé en ce que** les paramètres modifiables pour le réglage des moyens d'émission (MOD, UP) et de réception (DWN, DEM) servent à la transmission radio selon différents procédés de transmission.

16. Procédé pour la transmission radio dans un système radio (MRS) entre une station radio fixe (BS) une station radio distance (Msa), dans ledit procédé la transmission radio s'effectuant par un interface (COMa) avec des paramètres modifiables (Ta, Fa), qui indiquent la modulation et la démodulation pour la transmission radio et pour le changement de leur capacité de transmission et qui sont spécifiés et modifiés par la station radio fixe (BS) en fonction des demandes signalisées par la station radio distante (Msa) et en fonction d'une surveillance d'une zone de fréquence spécifiée menée par la station radio fixe (BS) et au moyen de laquelle les transmissions existantes dans la zone de bond radio (RC) de la station radio fixe (BS) sont évaluées, **caractérisé en ce que** les paramètres modifiables pour le réglage des moyens d'émission (MOD, UP) et de réception (DWN, DEM) servent à la transmission radio selon différents procédés de transmission.

17. Procédé pour la transmission radio selon au moins un procédé à accès multiple dans un système radio (MRS) entre une station radio fixe (BS) et (Msa) une parmi plusieurs stations radio distantes, dans ledit procédé la transmission radio s'effectuant par un interface (COMa) avec paramètres modifiables (Ta, Fa), qui indiquent une position de fréquence FDMA et/ou un codage CDMA pour le changement de la capacité de transmission (capacité de canal) de la transmission et qui sont spécifiés et modifiés par la station radio fixe (BS) en fonction des demandes signalisées par la station radio distante (Msa) et en fonction d'une surveillance d'une zone de fréquence spécifiée menée par la station radio fixe (BS) et au moyen de laquelle les transmissions existantes dans le domaine de champ (RC) de la station radio fixe (BS) sont évaluées, **caractérisé en ce que** les paramètres modifiables pour le réglage des moyens d'émission (MOD, UP) et de réception (DWN, DEM) servent à la transmission radio selon différents procédés de transmission.

18. Procédé pour la transmission radio selon la revendication 16 ou 17, **caractérisé en ce qu'**une capacité de transmission souhaitée (CAPr) est demandée par la station radio distante (Msa) pour la transmission radio et **en ce que** des capacités de transmission libres (CAP1) sont évaluées au moyen de la surveillance de la zone de fréquence spécifiée et les paramètres modifiables (Ta, Fa) spécifiés et modifiés pour la répartition de la capacité de transmission (CAPr) de telle sorte que les plus petites capacités de transmission libres possibles et le moins de capacités libres possibles soient occupées.

19. Procédé selon la revendication 18, **caractérisé en ce qu'**entre la station radio fixe (BS) et la station radio distante (Msa) est convenu de n'exécuter aucune transmission radio ou une transmission radio avec une qualité minimale au cas où la capacité de transmission souhaitée (CAPr) serait plus grande que les capacités de transmission libres (CAP1), moyennant quoi les paramètres modifiables (Ta, Fa) sont spécifiés par la station radio fixe (BS) de telle sorte que cette qualité minimale est assurée.
